# EUROPEAN PATENT APPLICATION

(11) **EP 1 852 346 A1**
(43) Date of publication of application: **07.11.2007**
(21) Application number: 07251576.0
(22) Date of filing: 12.04.2007
(51) Int. Cl.: B64D 27/26, F02C 7/20

(54) **Aeroengine mount**

(30) Priority: 06.05.2006 GB 0608983
(71) Applicant: Rolls-Royce plc, London SW1E 6AT (GB)
(72) Inventor: Beardsley, Peter Kevin, Littleover Derby DE23 3UY (GB); Knight, Glenn Alexander, Duffield Derby DE56 4GX (GB)
(74) Representative: Gunn, Michael Alan

(57) **Abstract**

A pylon structure (66) for mounting an engine (10) to an aircraft, characterised in that the pylon structure (66) is split into a mount beam (68) and a stub pylon (73), the mount beam (68) is a part of the engine and the stub pylon (73) is part of the aircraft. The advantage of the present invention is to facilitate easier assembly and disassembly of the engine to the aircraft.

## Description

The present invention relates to a mounting arrangement for an aircraft powerplant.

Conventional turbo fan engines are mounted to an aircraft at two discrete points usually referred to as front and rear mounts. For an under-wing engine installation a pylon extends from the wing to the front and rear mounts. The engine is connected and disconnected from the pylon at interfaces between each mount and the pylon.

This mounting arrangement is disadvantaged when access is required to the front and rear mounts, which are embedded within a nacelle surrounding the engine. Access to the mounts requires cowls on the nacelle to be opened. To remove the engine from the pylon requires the powerplant to have a vertical drop keep out zone.

A further particular disadvantage of this prior art mounting arrangement is encountered during installation of the pylon to the aircraft. Here the pylon structure must be suspended under the wing while a complex array of struts is attached between the wing and pylon. To connect the final strut the engine is first attached to the pylon and is then forced towards the wing to enable thrust struts to be assembled. Furthermore, the installation also includes connecting a pair of C-shaped ducts which each includes a thrust reverser unit and a set of fan cowl doors before connecting the engine to the aircraft. Thus because the C-shaped ducts are attached while the engine is installed they can cause interference making the operation particularly difficult.

A further disadvantage of this prior art design is that assembly of the engine to the aircraft is made by first attaching wing-to-pylon struts, the C-shaped ducts and then the engine itself. This means that the aircraft and fitting crews are waiting for each of these components to arrive on site and while each of the components are attached.

Therefore it is an object of the present invention to provide a simpler mounting arrangement that avoids the disadvantages described above. In particular, the invention allows an engine complete with its nacelle / C-shaped ducts to be mounted in one operation to the aircraft. Notably the aircraft and engine / nacelle suppliers are different organisations.

In accordance with the present invention a gas turbine engine comprises a pylon structure for mounting an engine to an aircraft, characterised in that the pylon structure is split into a mount beam and a stub pylon, the mount beam is a part of the engine and the stub pylon is part of the aircraft.

Preferably, the mount beam spans between a front and a rear mount of the engine.

Preferably, the pylon structure the split is defined by a single detachable interface between the mount beam and the stub pylon.

Alternatively, the pylon structure the split is defined by two or more detachable interfaces between the mount beam and the stub pylon.

Preferably, the engine is surrounded by a nacelle.

Preferably, the front mount is located within the nacelle.

Preferably, the engine comprises a fan casing and the front mount is located on the fan casing.

Alternatively, the engine comprises a core casing and the front mount is located on the core casing.

Preferably, the detachable interface(s) is located externally to the nacelle.

Preferably, the split is defined by a bolted flange arrangement.

Alternatively, the split is defined by a rail arrangement.

Preferably, the front and/or rear mount comprise at least one link.

Preferably, at least a part of the detachable interface(s) is located in front of the rear mount.

Preferably, the nacelle comprises a nozzle having an exit plane, the single detachable interface is located behind the exit plane.

Preferably, the mount beam comprises a box structure.

Preferably, the engine comprises an accessory, which is housed within the box structure.

Preferably, the engine comprises a further accessory, which is mounted to an external surface of the mount beam.

Preferably, the box structure is surrounded by a wall of a bifurcation, the wall defining a cooling air inlet arranged to provide cooling air to the accessory.

Preferably, the engine comprises an oil reservoir, the oil reservoir is defined by the box structure.

Preferably, the engine comprises service conduits that are routed through the mount beams or over a surface thereof.

Alternatively, the mount beam comprises a truss or frame structure.

The present invention will be more fully described by way of example with reference to the accompanying drawings in which:
Figure 1 is a schematic section of a ducted fan gas turbine engine incorporating a conventional mounting arrangement;
Figure 2 is a section AA in Figure 1, through a mounting between the engine and an aircraft's pylon;
Figure 3 is a section BB in Figure 1, through a conventional rear mount assembly;
Figure 4 is a schematic section of a ducted fan gas turbine engine incorporating a mounting arrangement in accordance with the present invention;
Figure 5A is a section CC in Figure 4, through a rear mount assembly in accordance with the present invention;
Figure 5B is a section CC in Figure 4, through an alternative rear mount assembly in accordance with the present invention;
Figure 6 is a view D in Figure 4, of an alternative mounting arrangement in accordance with the present invention;
Figure 7 is a view on E in figure 6;
Figure 8 is a schematic section of a ducted fan gas turbine engine incorporating a further embodiment of the mounting arrangement in accordance with the present invention;
Figure 9 is a section FF in Figure 8, through part of the mounting arrangement;
Figure 10 is an alternative embodiment of part of Figure 8.

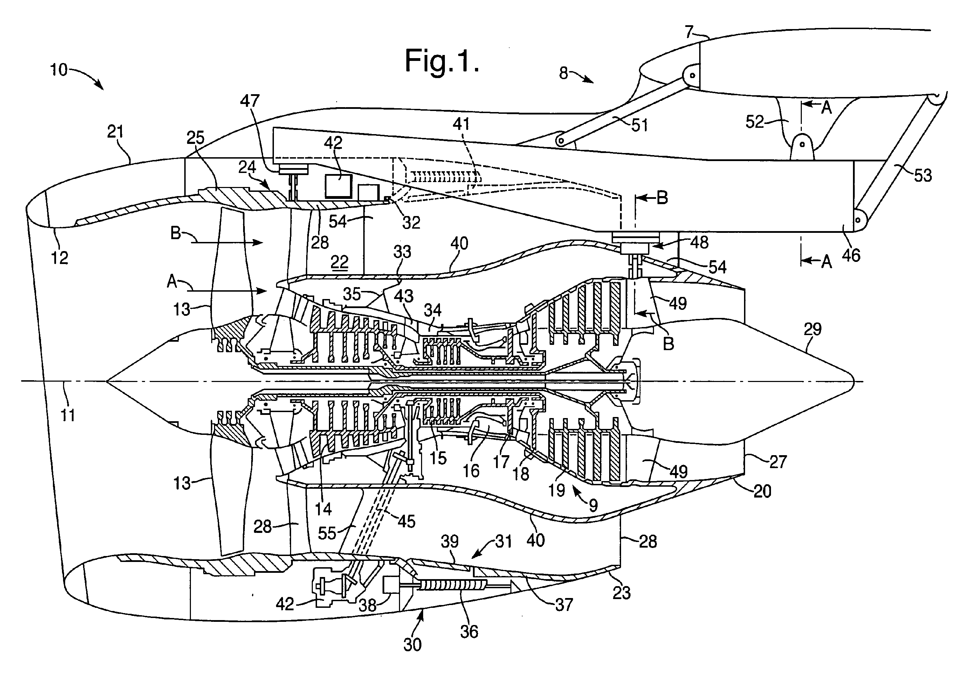

Referring to Figure 1, a ducted fan gas turbine engine generally indicated at 10 has a principal and rotational axis 11. The engine 10 comprises a propulsive fan 13 and a core engine 9 having, in axial flow series, an air intake 12, an intermediate pressure compressor 14, a high-pressure compressor 15, combustion equipment 16, a high-pressure turbine 17, an intermediate pressure turbine 18, a low-pressure turbine 19 and terminating with a core exhaust nozzle 20. A nacelle 21 generally surrounds the engine 10 and defines the intake 12, a bypass duct 22 and an exhaust nozzle 23 having an plane 28.

The gas turbine engine 10 works in the conventional manner so that air entering the intake 11 is accelerated by the fan 13 to produce two air flows: a first airflow A into the intermediate pressure compressor 14 and a second airflow B which passes through a bypass duct 22 to provide propulsive thrust. The intermediate pressure compressor 14 compresses the airflow A directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

A centre-plug 29 is positioned within the core exhaust nozzle 20 to provide a form for the core gas flow A to expand against and to smooth its flow from the core engine. The centre-plug 29 extends rearward of the core nozzle's exit plane 27.

The fan 13 is circumferentially surrounded by a structural member in the form of a fan casing 24, which is supported by an annular array of outlet guide vanes 28. The fan casing 24 comprises a rigid containment casing 25 and attached rearwardly thereto is a rear fan casing 26.

This conventional turbo fan engine 10, having separate bypass and core engine exhaust nozzles 20, 23, is installed under an aircraft's wing 7 via a pylon 8. The nacelle 21 comprises two C-shaped openable doors 30, each comprising two C-shaped thrust reverser units 31, that are hinged from the aircraft's pylon 8. The two C-shaped thrust reverser units 31 are also attached to the engine via one or two sets of V-shaped groove/blades fixtures 32, 33 that extend around part of the nacelle and engine. The C-shaped doors or ducts 30 define between them, at the top and bottom of the engine 10, bifurcation ducts 54, 55.

The thrust reverser units (TRU) 31 are attached to the rear fancase 26 and a core engine casing 34 via a stiff triangular structure 35. The TRU 31 comprises a number of discreet cascade boxes 36, a translating cowl 37, a translating system 38 (including an actuator and sliders), a blocking door mechanism 39, an inner fixed structure or core fairing 40 and a C-shaped bypass duct opening system (including hinges, latches and power opening system). The TRU 31 is normally split into left and right C-shaped ducts to enable engine removal and core engine 9 maintenance access. Hinges are defined on the pylon 8 towards the top of the C-shaped ducts and latches are defined to provide hoop continuity at the bottom of the nacelle 21 between the two C-shaped ducts.

Each cascade box 36 attaches to a stiffening ring 41 at its aft end to provide structural support. A cascade box 36 comprises an array of airflow turning vanes mounted within a frame. The cascade boxes 36 only carry aerodynamic loads when the thrust reverser is deployed. The rear fancase 26 provides space for fancase mounted accessories 42 (e.g. a gearbox) and a load path to give axial separation between the outlet guide vane array (OGV) 28 and two A-frames (not shown in figure) at 3 and 9 O'clock positions.

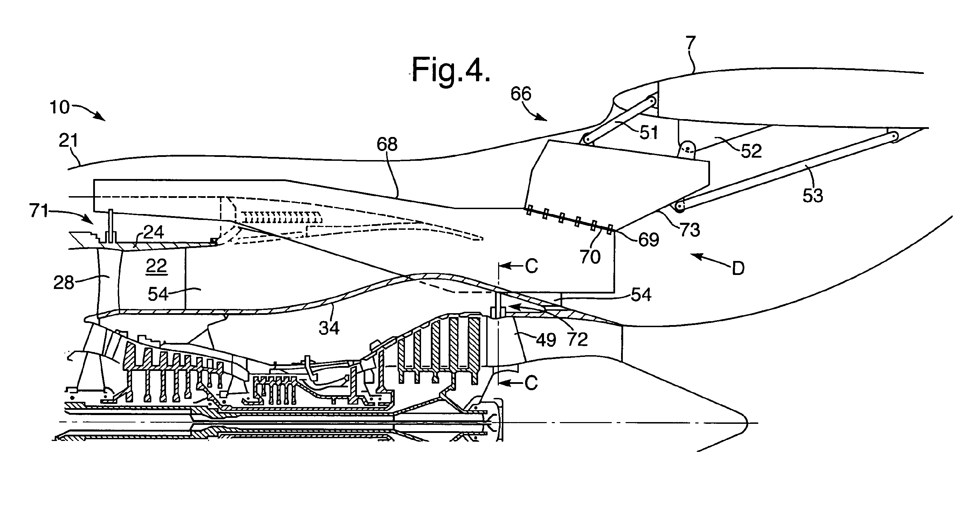

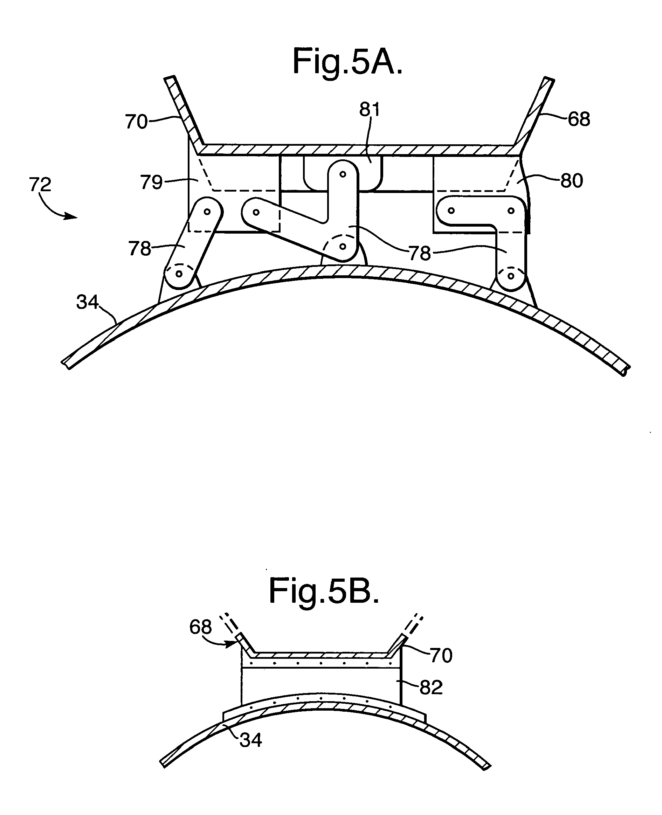

It should be noted that in this sectional schematic figure (1 also Figures 4 and 5) the upper nacelle 21, including the thrust reverser unit 31, has been shown in dashed lines for clarity, as in fact they do not extend around top dead centre of the engine 10, but abut the bifurcation duct 54.

The axial position of this conventional thrust reverser unit 31 is determined by length of the rear fancase 26, which is itself determined by (a) the size of the accessories 42 (e.g. a generator driven off a fan case mounted accessory gearbox), (b) the position of the gearbox' radial drive 45 (which needs to be sufficiently aft of the OGV's 28 and forward of the outer V-groove 32) and (c) the position of the A-frames, which need to react loads onto suitably strong core engine structure, in this case an intercase 43 or triangular structure 35.

On these prior art engines, and particularly on smaller three shaft engines, the length of the rear fancase 26 is disproportionately long relative to the overall length of the engine 10 and so the thrust reverser unit 31 is located considerably aft of a fan 13 which means the nacelle 21 also has substantial axial length.

The pylon 8 comprises an arrangement of pylon links 51, 52, 53 connecting between the wing 7 and a pylon structure 46. The pylon structure 46 extends forwardly from the wing 7 to a front mount 47 situated on the fan casing 24 adjacent the OGV array 28. Alternatively, the front mount 47 may be located on a stiff structure of the core engine 9 such as the intercase 43. A rear mount 48 is positioned on the core engine casing 34 adjacent a tail bearing housing 49 situated downstream of the low pressure compressor 19.

The pylon links 51, 52, 53 are connected to wing 7 and engine 10 via pinned lugs. The pylon links 51, 52, 53 carry all engine loads to the wing 7.

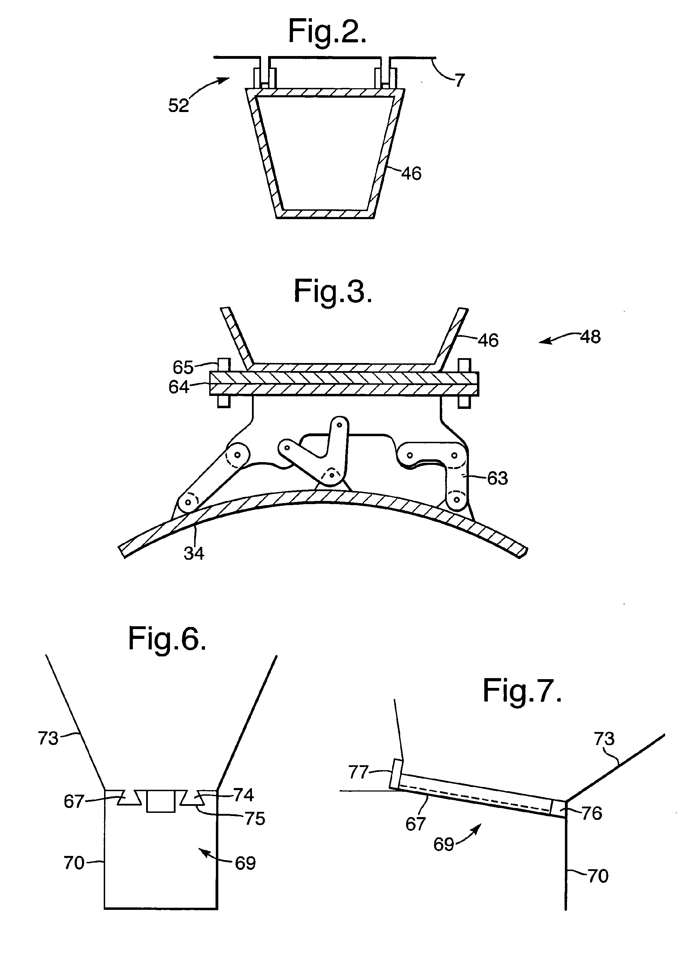

Figure 2 shows the pylon structure 46 as a stiff box structure and, at section AA, it supports two spaced apart pylon links 52, which carry vertical, side and torque loads of the engine 10.

Figure 3 shows a typical rear mount 48 arrangement and particularly the connection between core engine casing 34 and pylon structure 46. The rear mount 48 arrangement comprises a number of links 61, 62, 63 for carrying side vertical and torque loads and the combination of which has a degree of redundancy or fail-safe in the event of failure of a link. A bracket 60 comprises a plate 64, which is bolted to a similar plate 65 attached to the pylon 7. The front mount 47 comprises a similar array of links, although it may be adapted to carry thrust loads, and is attached to the pylon 7 in similar fashion. Therefore to disconnect the engine 10 from the pylon structure 46 the two plates 64, 65 are unbolted. However, to reach the two plates 64, 65 the C-shaped ducts 30 must be opened. Note that the rear mount 48 is housed within the bifurcation duct 54.

The present invention is now described with reference to figures 4 to 10, where the reference numerals indicate like parts as in Figure 1.

Referring to Figures 4 and 5, the present invention relates to a pylon structure 66 which is split into a mount beam 68 and a stub pylon 73. The mount beam 68 is a part of the gas turbine engine 10 and the stub pylon 73 is part of the aircraft structure.

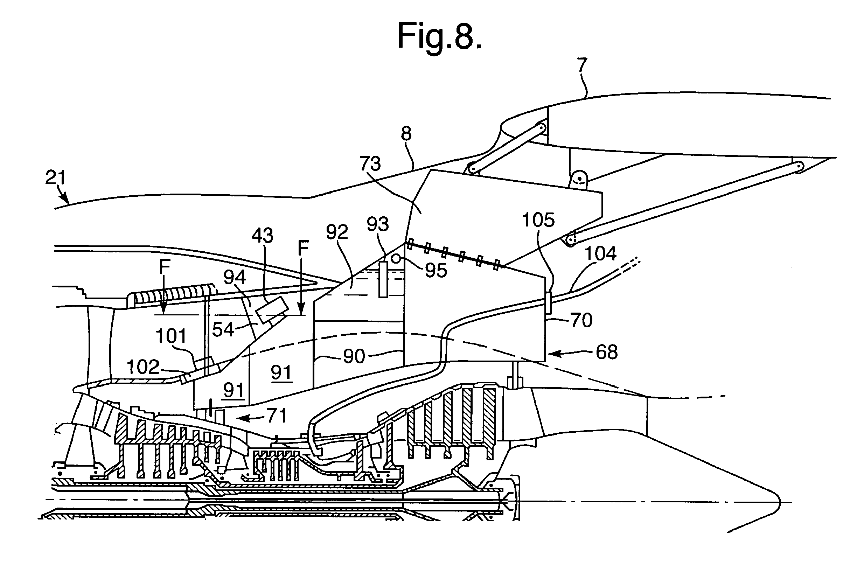

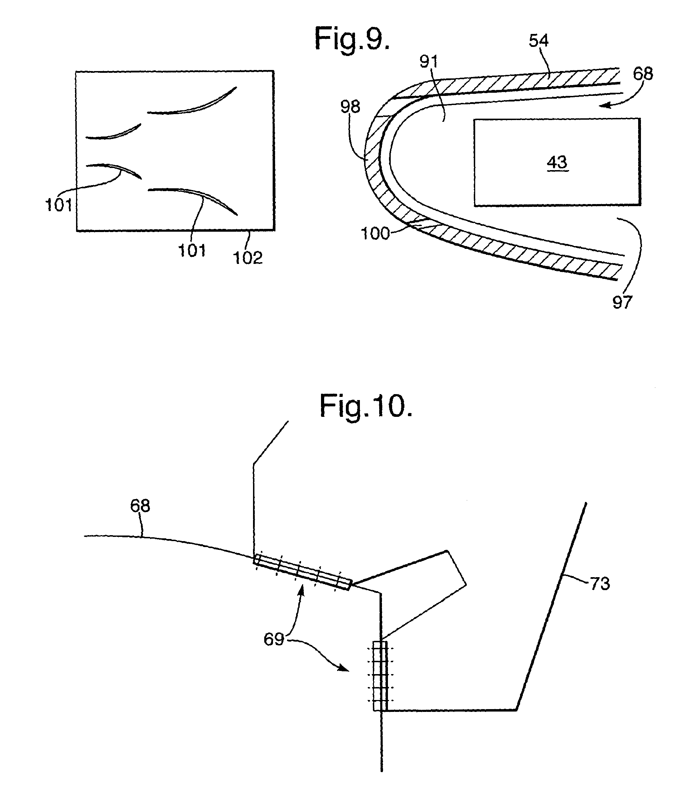

The pylon structure 66 comprises a detachable interface 69 between the mount beam 68 and stub pylon 73. Preferably the interface 69 is a single attachment as shown in the Figures 4 and 8, however, there may also be two or more attachments as shown in Figure 10. Importantly, the attachment(s) are conveniently placed externally of the nacelle and do not require the C-shaped ducts to be opened for access thereto.

As shown in the Figures, the mount beam 68 and stub pylon 73 define a single detachable interface 69 with the aircraft structure (8, 7). Although the mount beam 68 is described as integral with the engine 10 it is obviously assembled as is any other part of the engine 10. However, it is intended that once the mount beam 68 has been attached to the engine 10 it will remain attached unless removed for its maintenance or replacement. Thus disassembly of the engine 10 from the aircraft is via the single detachable interface 69 and the mount beam 68 stays with the engine.

The mount beam 68 spans between a front mount 71 and a rear mount 72 on the engine 10. The mount beam 68 includes the (single or multiple) detachable interface 69 that connects to a cooperating and like part on the structure of the aircraft, which in this case is the stub pylon 73. The stub pylon 73 is mounted from the aircraft wing 7 preferably using the same connections and similar links 51, 52, 53 to the prior art arrangement. It should also be appreciated that the stub pylon 73 may be mounted to a fuselage of the aircraft instead. Furthermore, although the present invention is described with reference to the stub pylon 73 being attached to the wing 7 via a link arrangement, other attachment means are possible and well known in the art.

As shown in figure 4 the single detachable interface 69 is a bolted flange arrangement 70. However, as shown in figures 6 and 7 the single detachable interface 69 may be a rail arrangement 67 such as a dovetail slot 75 and dovetail root 74. Other rail arrangements known to the skilled artisan, which are also suitable for this use, are intended to be within the scope of the present invention. In figure 7 the rail arrangement 67 has a stop feature 76 which provides a positive location for the mount beam 68 relative to the stub pylon 73. A bolted plate 77 secures the mount beam 68 to the stub pylon 73 to prevent disengagement. The plate 77 and the stop feature 76 may of course be interposed with one another.

As with the prior art engine a nacelle 21 surrounds the engine 10 and so the front mount 71 is located within the nacelle 21. Similarly the rear mount 72 is also mounted within the bifurcation duct 54 of the nacelle 21 and is opened with the C-shaped duct 30. In the prior art design disconnection of the engine 10 from the aircraft would mean opening the C-shaped ducts 30 of the nacelle 21 for access to the mounts (47, 48). The present invention is advantaged over the prior art in that the single detachable interface 69 may be connected or disconnected without the need to open the nacelle 21. Notably, and as shown in Figures 4 and 8, the single detachable interface 69 is located externally to the bypass duct 22 of the nacelle 21 providing easy access thereto.

In Figure 4 the single detachable interface 69 is shown positioned rearward of the rear mount 72 and the engine 10 is therefore in a similar position relative to the wing 7. However, to reduce engine-to-wing over hang loads, at least a part of the single detachable interface 69 may be located in front of the rear mount 72 or it may be completely located in front of the rear mount 72 as shown in figure 8. In the figure 4 the front mount 71 is located on the fan casing 24. However, in figure 8 the mount beam 68 is connected to the engine 10 via the front mount 71 positioned on the core casing 34.

Figure 5A shows an arrangement of the rear mount 72 in accordance with the present invention, but also illustrates how the front mount 71 also differs from the prior art design. The rear mount 72 comprises a set of links 78 similar to the prior art rear mount (48) being attached between pinned lugs 79, 80. Rather than having a mount bracket (60) and bolted plates (64, 65), the lugs 79, 80 extend directly from the mounting structure 70. This is also the case for the front mount 71.

Figure 5B shows an alternative rear mount assembly to figure 5A where the links 78 are replaced by a single link 82.

The bypass nozzle 23 has an exit plane 28 and the single detachable interface 69 is located behind the exit plane 28. This is preferable so as to enable easier access to the interface 69 without opening the C-shaped ducts 30 and to avoid obstruction when moving and removing the engine 10 to and from the stub pylon 73.

Figure 8 is a longitudinal section through the engine 10 showing a second embodiment of the mount beam 68. The mount beam 68 is constructed as a box structure 70 comprising stiffening webs 90 and which define discrete spaces 91. A further advantage of the present invention is that these spaces 91 may house various engine accessories 42 rather than mounting the accessories on the fancase 24 or within the engine core fairing 40. Alternatively, the external surface of the mount beam 68 may be used for attaching other accessories to such as a fuel pipe 104 and fuel pump.

An oil reservoir 92 is formed by the box structure 70 with a sight glass 93 and fill port 94 being usefully positioned on an external surface for easy visual inspection without the need to open nacelle cowl doors or the C-shaped ducts 30.

An engine control unit 43 is conveniently housed within a space 94 defined on an external surface 97 of the box structure 68 and within the bifurcation walls 54. Here it is preferable to provide an airflow to cool its electronic components. To this end the a leading edge or splitter fairing 98 of the bifurcation walls 54 defines at least one cooling air inlet 100 arranged to direct cooling air to the ECU 43 or other accessories 42. Just upstream from the cooling air inlet 100 is an array of vanes 101 which direct bypass air flow A around the bifurcation duct 54 that encloses part of the mount beam 68. Also situated upstream on the mount beam 68 is a surface cooler 102 for cooling engine oil. The vanes 101 are situated on the cooler 102 to enable heat conduction to the bypass airflow A and may comprise internal passages to allow oil the pass therethrough to enhance cooling of the oil.

A further advantage of the engine comprising the mount beam 68 is that service conduits 104, for example a fuel feed pipe 104 running to the combustion equipment 16, are routed through its box structure and into the pylon 8. A disconnect panel 105 is provided on an external surface of the mount beam 68 to facilitate easy connection and disconnection of the service pipes 104 for assembly and disassembly of the engine 10 to the aircraft.

Although the mount beam 68 is described as a box structure it may instead be a truss or frame structure.

The present invention also relates to an aircraft having a stub pylon 73 comprising a corresponding single detachable interface 69. The interface 69, as herein before described, is preferably a bolted flange 69 but may also be a rail arrangement 67 for cooperation with the mount beam's 68 interface.

The present invention also includes a method of connecting or disconnecting an engine 10 from an aircraft 7. The engine 10 comprising a mount beam 68 as described herein and the method comprises the step of connecting or disconnecting the single detachable interface between the engine and aircraft.

It should be appreciated that the present invention is equally applicable to a two-shaft engine where there is no rear fan case 26 or structurally rigid cascade.

## Claims

1. A pylon structure (66) for mounting an engine (10) to an aircraft, **characterised in that** the pylon structure (66) is split into a mount beam (68) and a stub pylon (73), the mount beam (68) is a part of the engine (10) and the stub pylon (73) is part of the aircraft.

2. A pylon structure (66) as claimed in claim 1 wherein the mount beam (68) spans between a front and a rear mount (71, 72) of the engine (10)

3. A pylon structure (66) as claimed in any one of claims 1-2 wherein, the pylon structure (66) the split is defined by a single detachable interface (69) between the mount beam (68) and the stub pylon (73).

4. A pylon structure (66) as claimed in any one of claims 1-2 wherein, the pylon structure (66) the split is defined by two or more detachable interfaces (69) between the mount beam (68) and the stub pylon (73).

5. A pylon structure (66) as claimed in any one of claims 1-4 wherein the engine (10) is surrounded by a nacelle (21).

6. A pylon structure (66) as claimed in claim 5 wherein the front mount (71) is located within the nacelle (21).

7. A pylon structure (66) as claimed in any one of claims 1-6 wherein the engine comprises a fan casing (24) and the front mount (71) is located on the fan casing (24).

8. A pylon structure (66) as claimed in any one of claims 1-6 wherein the engine comprises a core casing (34) and the front mount (71) is located on the core casing (34).

9. A pylon structure (66) as claimed in claim 5 and any claim dependent thereon, wherein the detachable interface(s) (69) is located externally to the nacelle (21).

10. A pylon structure (66) as claimed in any one of claims 1-9 wherein the split (69) is defined by a bolted flange arrangement (70).

11. A pylon structure (66) as claimed in any one of claims 1-9 wherein the split (69) is defined by a rail arrangement (67).

12. A gas turbine engine (10) as claimed in claim 2 and any claim dependent thereon wherein the front and/or rear mount (71, 72) comprise at least one link (79, 80, 81, 82).

13. A gas turbine engine (10) as claimed in any one of claim 2 and any claim dependent thereon wherein at least a part of the detachable interface(s) (69) is located in front of the rear mount (72).

14. A gas turbine engine (10) as claimed in any one of claims 3-4 wherein the detachable interface(s) (69) is located in front of the rear mount (72).

15. A gas turbine engine (10) as claimed in claim 2 and any claim dependent thereon, wherein the nacelle (21) comprises a nozzle (23) having an exit plane (28), the single detachable interface (69) is located behind the exit plane (28).

16. A gas turbine engine (10) as claimed in any one of claims 1-15 wherein the mount beam (68) comprises a box structure (70).

17. A gas turbine engine (10) as claimed in claim 13 wherein the engine comprises an accessory (42), which is housed within the box structure (70).

18. A gas turbine engine (10) as claimed in claim 13 wherein the engine comprises an accessory (42), which is mounted to an external surface (98) of the mount beam (68).

19. A gas turbine engine (10) as claimed in claim 13 wherein the box structure (68) is surrounded by a wall (54) of a bifurcation, the wall (54) defining a cooling air inlet (100) arranged to provide cooling air to the accessory (42).

20. A gas turbine engine (10) as claimed in any one of claims 16-19 wherein the engine comprises an oil reservoir (92), the oil reservoir (92) is defined by the box structure (70).

21. A gas turbine engine (10) as claimed in any one of claims 1-20 wherein the engine comprises service conduits (104) that are routed through the mount beams (69) or over a surface thereof.

22. A gas turbine engine (10) as claimed in any one of claims 1-15 wherein the mount beam (68) comprises a truss or frame structure.
